# EUROPEAN PATENT APPLICATION

(11) **EP 4 752 000 A1**
(43) Date of publication of application: **03.06.2026**
(21) Application number: 25217085.7
(22) Date of filing: 19.11.2025
(51) Int. Cl.: B60R 1/26, B60K 35/60, B60K 35/10, B60K 35/22, B60K 35/23, B60K 35/26

(54) **VEHICLE**

(30) Priority: 28.11.2024 GB 202417483; 26.02.2025 GB 202502810
(71) Applicant: Jaguar Land Rover Limited, Coventry, Warwickshire CV3 4LF (GB)
(72) Inventor: Lad, Hitesh, Coventry, CV3 4LF (GB); Little, Oliver, Coventry, CV3 4LF (GB)
(74) Representative: Jaguar Land Rover Patents Department

(57) **Abstract**

Aspects of the present invention relate to a vehicle (1) and a rear-view system for a vehicle. The vehicle comprises an instrument panel (50), a windscreen (16), and a rear-view system. The rear view system comprises a rear-view display unit which comprises a rear-view display screen. The rear-view display unit is mounted in the vehicle forward of the instrument panel of the vehicle and outside a field of view through the windscreen. The rear view system is configured to receive one or more video signals from one or more rearward facing cameras provided on the vehicle and display an image of a view to the rear of the vehicle based on the one or more video signals.

## Description

### TECHNICAL FIELD

The present disclosure relates to a vehicle. Aspects of the invention relate to a vehicle.

### BACKGROUND

It is known to provide rear view mirrors within vehicle cabins to allow a vehicle operator or occupant to see an area directly behind the vehicle. Such mirrors are often mounted to or adjacent a roof of the vehicle cabin and as such can obstruct a portion of the vehicle operator's view out of the vehicle cabin. Further, the rear view mirror is typically mounted rearward of, or towards a rear edge of a windscreen of the vehicle. Hence, when changing between looking forward out of the vehicle cabin and looking at a rear-view mirror inside the vehicle cabin there is a requirement for the vehicle operator to change their eye focus when moving between the two views.

It is an aim of the present invention to address one or more of the disadvantages associated with the prior art.

### SUMMARY OF THE INVENTION

Aspects and embodiments of the invention provide a rear-view display system, and a vehicle as claimed in the appended claims.

According to an aspect of the present invention there is provided a rear-view system for a vehicle comprising: a rear-view display unit configured to receive one or more video signals from one or more rearward facing cameras provided on the vehicle and display an image of a view to the rear of the vehicle based on the one or more video signals, wherein the rear-view display unit is configured to be mounted in the vehicle forward of an instrument panel of the vehicle and beneath a level of a windscreen of the vehicle.

According to an aspect of the present invention there is provided a vehicle comprising: an instrument panel; a windscreen; and a rear-view system comprising: a rear-view display unit configured to receive one or more video signals from one or more rearward facing cameras provided on the vehicle, the rear-view display unit comprising a rear view display screen configured to display an image of a view to the rear of the vehicle based on the one or more video signals, wherein the rear-view display unit is mounted in the vehicle forward of the instrument panel of the vehicle and outside a field of view through the windscreen.

By mounting the rear-view display unit beneath the level of the windscreen and forward of the instrument panel, the display unit does not obscure any portion of the driver's field of view through the windscreen, but is provided in a convenient location to be viewed by the driver whilst reducing changes their line of sight and focal distance. Further, providing a rear-view display unit, which receives video signals from one or more rear view cameras, allows the field of view of the rear-view display to be improved without requiring a direct line of sight between the rear-view display unit and the rear of the vehicle, this may enable a rear window of the vehicle to be omitted.

For example, the rear-view display unit may be mounted below the field of view of the driver through the windscreen when the driver is in a nominal driving position. The nominal driving position may be a position seated in a driving seat of the vehicle.

In this way, the rear-view display unit may not obscure any part of the driver's view through the windscreen.

The vehicle further comprises a main display unit comprising a main display screen configured to display a user interface comprising user input options for enabling a Field Of View, FOV, displayed by the rear view display screen and/or brightness of the rear view display screen of the rear-view display unit to be controlled.

In other words, the main display unit may be configured to receive a user input to control the FOV and/or brightness of the rear view display screen. In this way, the vehicle may provide a convenient way for a user, e.g. a driver, to adjust the FOV and brightness of the rear view display unit, using a control that is more easily within reach of the user.

The main display unit may be mounted in the vehicle closer to a driving position than the rear-view display unit. For example, the main display unit may be mounted rearward of the rear-view display unit. The instrument panel comprises the main display unit. In other words, the main display unit may be integrated into the instrument panel. For example, the instrument panel may comprise an instrument display unit which may be the main display unit.

In this way a number of display units provided within the vehicle, which the user, e.g. the driver, may wish to interact with in order to operate controls of the vehicle, can be reduced. This may allow more of the driving controls to be provided in more convenient locations within the vehicle.

The rear-view system may further comprise one or more physical user input buttons provided on an overhead console of the vehicle. The one or more physical user input buttons may duplicate one or more of the user input options provided in the user interface displayed by the main display unit.

For some users and control situations, a physical button, which may be permanently available for directly providing a particular user input, may be desirable.

The user interface may include a user input option selectable to activate a physical user input device provided on a steering wheel to enable the FOV or brightness of the rear view display unit to be adjusted using the physical user input device on the steering wheel.

The user interface may comprise one or more menus and/or submenus. The user input options may be displayed within one of the menus or submenus.

The vehicle may further comprise the steering wheel comprising a physical user input device, such as a button, to enable the FOV or brightness of the rear view display unit to be adjusted. The physical user input device may be configured to enable the FOV or brightness of the rear view display to be adjusted in the same way as using a user input option provided by the user interface. In other words, providing an input using the physical user input device may result in the same adjustment/output as providing the input using a corresponding user input option of the user interface.

In this way a tactile user input control may be provided for adjusting the FOV of the rear-view display unit, which may be operated when the user, e.g. the driver, is in a normal seating/driving position. This may enable the user to adjust the FOV without moving from their normal seating/driving position, so that the FOV can be adjusted whilst the user has their normal view of the rear-view display unit.

The rear-view display unit may be mounted forward of a steering wheel of the vehicle and/or forward of a rear extent of an upper surface of an instrument panel structure. The rear-view display unit may be mounted on or above an upper surface of an instrument panel structure of the vehicle.

Mounting the rear-view display unit on or above an upper surface of an instrument panel structure may position the rear-view display unit in a location which increases the ease with which a driver switch between a forward view and a rear view, without obscuring a portion of the drivers forward view through the windscreen.

The rear-view display unit may be mounted closer to a lower edge of the windscreen than to the instrument panel in a longitudinal direction of the vehicle. The rear-view display unit may be aligned, e.g. substantially aligned, with the lower edge of the windscreen in the longitudinal direction of the vehicle. The rear-view display unit may therefore be positioned in a forward position within the vehicle cabin, so that changes in the driver's focusing distance are minimised when viewing the rear-view unit compared to the road and/or traffic ahead of the vehicle.

The rear-view display unit may be mounted centrally in a lateral direction of the vehicle. For example, the rear-view display unit may be positioned in the centre of the width of a trim panel extending at least partially across the width of the vehicle cabin and upstanding from the upper surface of the instrument panel structure, optionally in the centre of the width of the instrument panel structure.

Positioning the rear-view display unit in the centre of the vehicle, optionally in the centre of the instrument panel structure, may allow a common trim panel to be used, for example on left and right hand drive cars.

The rear-view display unit may be incorporated within a trim panel of the vehicle arranged beneath the windscreen. For example, the trim panel may be between the windscreen and an upper surface of an instrument panel structure.

Incorporating the rear-view display unit within a trim panel of the vehicle arranged beneath the windscreen may remove the need for a traditional rear-view mirror hanging from a roof of the vehicle cabin.

The rear-view display unit may be integrated into a sound bar for an entertainment system of the vehicle, wherein the sound bar is arranged beneath the front windscreen. For example, the sound bar may be arranged between the windscreen and an upper surface of an instrument panel structure.

Incorporating the rear-view display unit within a sound bar may improve packaging of the entertainment and rear-view systems of the vehicle.

The vehicle may further comprise the one or more rearward facing cameras mounted on a roof or rear facing panel (of portion thereof) of the vehicle.

The vehicle may further comprise a microphone. The rear-view display unit may be configured to adjust a field of view and/or brightness of the rear-view display screen based on one or more voice commands received via the microphone.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1a is a schematic front perspective view of a vehicle;
Figure 1b is a schematic rear perspective view of a vehicle;
Figure 2 shows a schematic representation of a portion of a vehicle cabin;
Figure 3 shows another schematic representation of a portion of a vehicle cabin;
Figure 4 shows a schematic cross-sectional representation of a portion of a vehicle cabin; and
Figure 5 shows a schematic representation of a graphical user interface for a main display unit of the vehicle cabin.

### DETAILED DESCRIPTION

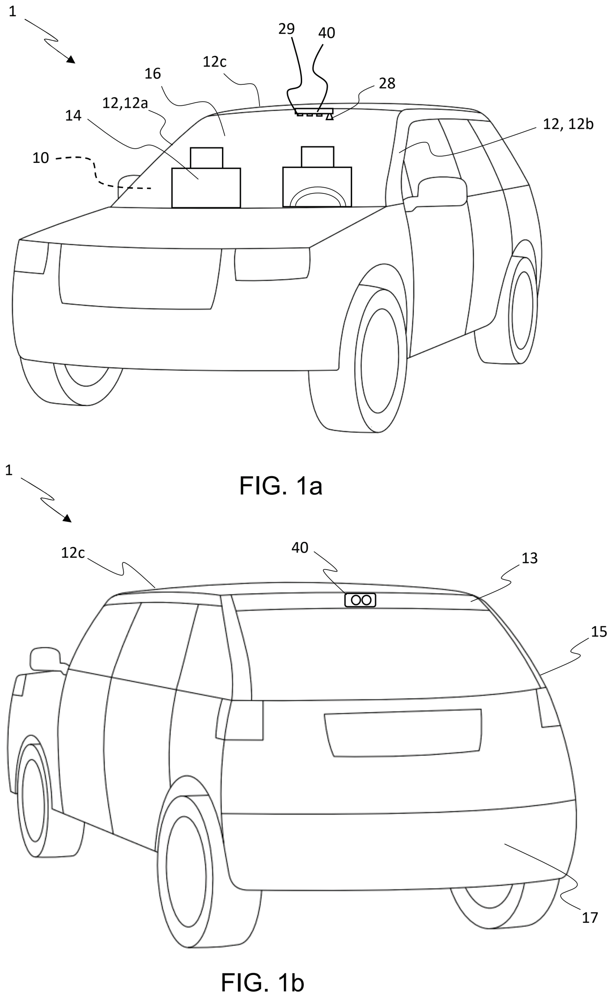

Figures 1a and 1b show a vehicle 1 according to an embodiment of the present invention. The vehicle 1 may comprise a vehicle cabin 10 in which vehicle occupants may sit. One or more seats 14 may be provided to support a passenger and/or an operator, e.g. driver, of the vehicle 1. The vehicle cabin 10 may be positioned towards the front of the vehicle 1, the front of the vehicle 1 being defined by the usual intended direction of travel of the vehicle 1 in normal, e.g. non-reversing, operation. The vehicle cabin 10 may extend across substantially the full width of the vehicle 1.

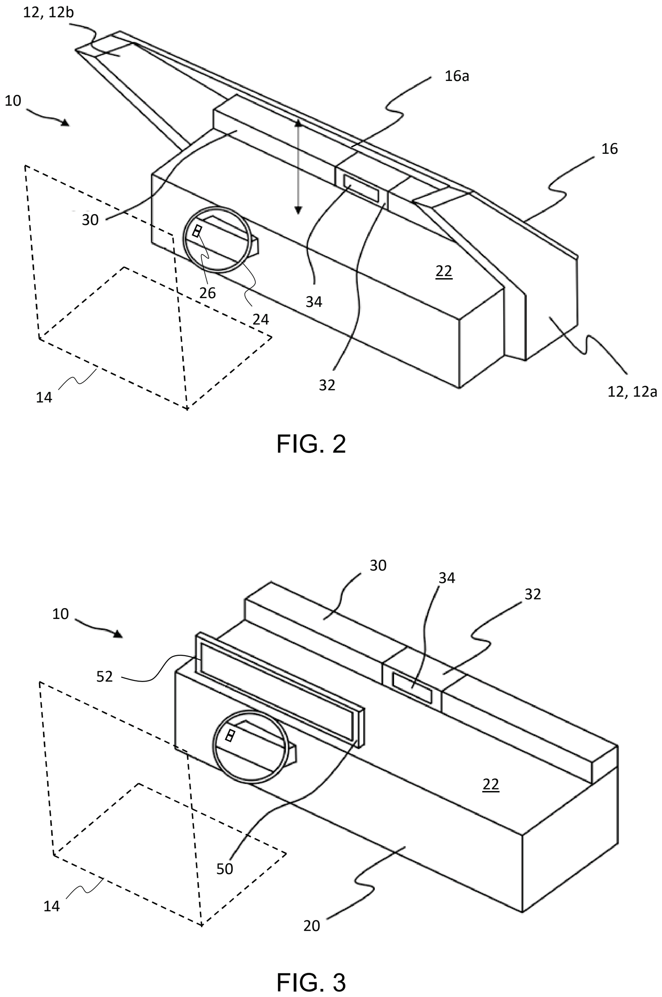

The vehicle cabin 10 may be defined by one or more vehicle structures 12 which may collectively be referred to as a body in white or a portion of the body in white. The body in white may comprise a series of vehicle structures 12 coupled together, for example using welding and/or riveting. The vehicle cabin 10 may be at least partially defined by a roof portion 12c of the vehicle structure 12, which may define an upper region of the vehicle cabin 10. The vehicle structures 12 may comprise pillars 12a, 12b, which may be termed A-pillars. A windscreen 16 of the vehicle may be located between the A-pillars 12a, 12b. An example of a vehicle cabin 10 comprising a first A-pillar 12a and a second A-pillar 12b on opposite sides of the vehicle cabin 10 is shown more clearly in Figure 2.

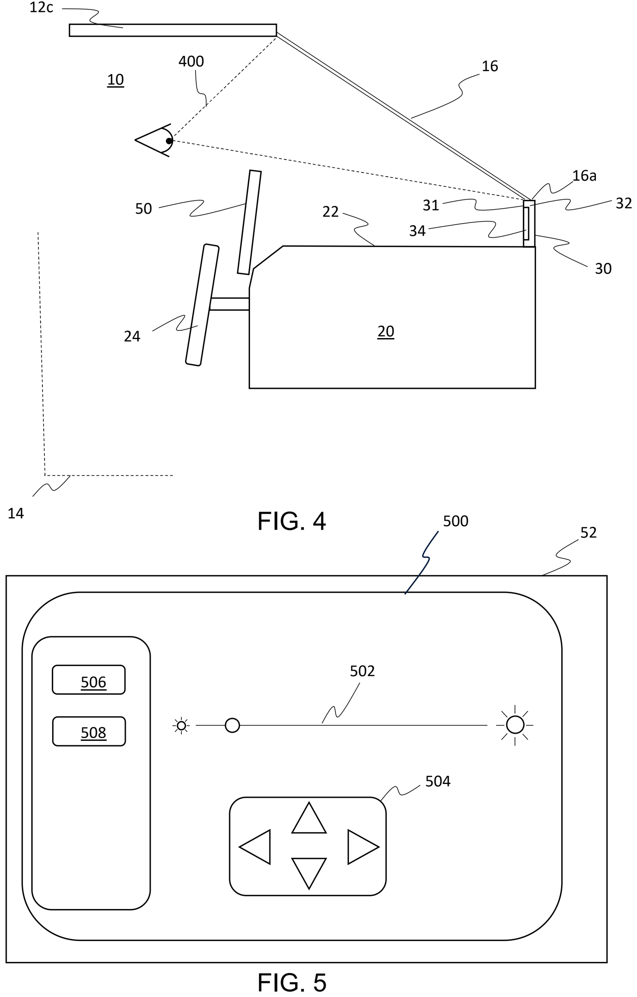

Figures 2 to 4 show schematic views of a portion of the vehicle cabin 10. The vehicle cabin 10 comprises an instrument panel structure 20 that extends across the width of the vehicle cabin 10. The instrument panel structure 20 is positioned at a forward location of the vehicle cabin 10, forward here defined as being towards the front of the vehicle 1. The instrument panel structure 20 is forward of the front seats 14 of the vehicle. Further, the instrument panel structure 20 may be forward of a steering control, such as a steering wheel 24, of the vehicle. The instrument panel structure 20 defines a support structure for housing and/or supporting components within the vehicle cabin 10. In particular, the instrument panel structure 20 may support an instrument panel 50 of the vehicle, illustrated in Figures 3 and 4, comprising one or more instruments indicating one or more, e.g. respective, operating parameters of the vehicle, such as speed, engine RPM, temperature, etc. Further examples of components housed and/or supported by the instrument panel structure 20 may include operator controls, the steering wheel 24 and one or more storage compartments. The instrument panel structure 20 may be coupled directly to the A-pillars 12a, 12b as shown in Figure 2. The A-pillars 12a, 12b may further at least partially support the windscreen 16 of the vehicle 1 (omitted from Figure 3 for clarity).

The vehicle cabin 10 may further comprise a trim panel 30 located on top of the instrument panel structure 20. The trim panel 30 may be upstanding from and extend, e.g. upwardly, from an upper surface 22 of the instrument panel structure 20. Accordingly, the trim panel 30 may be arranged beneath the windscreen 16. Further, the trim panel may extend at least partially, or completely, across the width of the vehicle cabin 10. The upper surface 22 of the instrument panel structure 20 may be substantially planar as shown in Figure 2, which may improve the ease of locating the trim panel 30 to the instrument panel structure 20, e.g. during assembly of the vehicle cabin 10. The trim panel 30 may be provided at a forward edge or location of the instrument panel structure 20, and as such may extend from the upper surface 22 of the instrument panel structure 20 towards the windscreen 16 of the vehicle 1. As shown in Figure 4, the trim panel 30 may be substantially aligned with a lower edge 16a of the windscreen.

In some arrangements, the trim panel 30 may comprise a sound bar for an entertainment system of the vehicle. For example, the trim panel 30 may house a plurality of speakers (not shown) having different diameters, or effective diameters, spaced along the length of the trim panel 30, e.g. across the width of the vehicle cabin.

The vehicle 1 further comprises a rear-view system comprising a rear-view display unit 32. The rear-view display unit 32 comprises a rear-view display screen 34 configured to display an image of a view to the rear of the vehicle 1.

Returning to Figure 1b, the vehicle, e.g. the rear view system, may comprise one or more rearward facing cameras 40. The rearward facing cameras may be arranged to capture an image of the area behind the vehicle 1. The rearward facing cameras may be mounted on a rear facing panel of the vehicle, such as a tailgate panel 13, a side-panel 15 or a rear bumper 17. Additionally or alternatively, one or more of the rearward facing cameras may be mounted on a roof panel 12c of the vehicle. In general, it will be appreciated that the one or more cameras 40 may be positioned anywhere about the vehicle 1 where it is able to capture the view that is desired to be shown on the rear-view display screen 34. The rearward facing cameras may comprise any form of image capture device capable of capturing an image of the area behind the vehicle. In particular, the rearward facing cameras may be 2D or 3D, e.g. stereo, cameras and may be configured to capture images based on visible light and/or electromagnetic radiation outside the visible spectrum, such as infrared light.

The rear-view display unit 32 is configured to receive one or more video signals from the one or more rearward facing cameras 40 and display, using the rear-view display screen 34, an image of a view to the rear of the vehicle based on the one or more video signals. For example, the rear-view display unit 32 may select one of the video signals and display the image based on the one of the video signals. Alternatively, the rear-view display unit may generate a compound image based on more than one of the video signals and may display the compound image using the rear-view display screen. The rear-view display screen 34 may be configured to display a live stream of the images captured by the one or more cameras 40 such that a vehicle operator can see an image of the area behind the vehicle 1 at all times during use. As such, the rear-view display unit 32 may replace a traditional rear-view mirror often provided in vehicle cabins. The rear-view display unit 32 may be configured to display only an image from the one or more cameras 40 (i.e. no further vehicle information) to reduce the likelihood of a vehicle operator becoming distracted when viewing the rear-view display unit 32. Additionally, the rear-view display unit 32 may be configured to be selectively turned off, so as to not show an image using the rear-view display screen.

Returning to Figures 2 to 4, the rear-view display unit 32 is mounted in the vehicle forward of the instrument panel 50. Further, the rear-view display unit may be mounted forward of the steering wheel 24 and/or forward of a rear extent of the upper surface 22 of the instrument panel structure.

As illustrated in Figure 4 in particular, the rear-view display unit 32 is mounted in the vehicle outside a field of view 400 through the windscreen. More particularly, the rear-view display unit 32 may be mounted in the vehicle outside, e.g. below, the field of view 400 of a vehicle operator through the windscreen when the vehicle operator is in a nominal vehicle operating position, e.g. seated in the seat 14 of the vehicle within reach of driving controls of the vehicle, such as the steering wheel 24. Accordingly, the rear-view display unit 32 may be mounted at least partially beneath (optionally completely beneath) the windscreen 16, e.g. beneath (optionally completely beneath) a level of the windscreen 16. In this way, the rear-view display unit 32 may not obscure any part of the driver's view through the windscreen.

The rear-view display unit 32 may therefore be provided adjacent the upper surface 22 of the instrument panel structure 20. More particularly, the rear-view display unit 32 may be mounted on or above the upper surface 22 of the instrument panel structure 20. The rear-view display unit may be mounted towards or at/beneath the lower edge 16a of the windscreen 16 as viewed from a vehicle operator within the vehicle cabin 10. The rear-view display unit 32 may be mounted closer to the lower edge 16a of the windscreen than to the instrument panel 50 in a longitudinal direction of the vehicle. In some arrangements, the rear-view display unit 32 may be substantially aligned with the lower edge 16a of the windscreen in the longitudinal direction of the vehicle.

The trim panel 30 may comprise the rear-view display unit 32. In other words, the rear-view display unit 32 may be incorporated within the trim panel 30. However, it will be appreciated that the trim panel 30 and rear-view display unit 32 may alternatively be provided as separate components. As such, in an alternative embodiment the vehicle cabin 10 may comprise a rear-view display unit 32 upstanding from the upper surface 22 of the instrument panel structure 20 with no trim panel 30 or a separate trim panel 30.

In the example shown, the trim panel 30 comprises a rearward facing panel/surface 31 with which the rear-view display screen 34 is flush.

The rear-view display unit may be mounted at the approximate centre of the width of the vehicle and/or vehicle cabin 10 (optionally also in the centre of the instrument panel structure 20). This may enable a common rear-view display unit 32 position to be used for both left- and right-hand drive vehicles (i.e. vehicles where a vehicle operator sits towards the left and the right of the vehicle respectively). Similarly, providing the rear-view display unit 32 in the centre of the trim panel 30 may enable a common trim panel 30 to be used for both left- and right-hand drive vehicles.

The rear-view display screen 34 may also be orientated to be more easily visible to a vehicle operator. As described previously, the trim panel 30 extends across the width of the vehicle cabin 10 in a first direction. The rear-view display screen 34 may be orientated to face in a second direction that is orthogonal to the first direction and is towards the vehicle operating position occupied by a vehicle operator inside the vehicle cabin 10. That is to say that the rear-view display screen 34 may face directly backwards away from the front of the vehicle 1. By not angling the rear-view display screen 34 relative to the forward-backward direction of the vehicle 1, the display screen 34 may be more easily visible to a vehicle operator across a greater range of locations inside the vehicle cabin 10.

Referring to Figures 3 and 4, the vehicle may further comprise a main display unit 50 comprising a main display screen 52. As illustrated, the main display unit may extend upward from the upper surface 22 of the instrument panel structure 20. Additionally or alternatively, the main display unit may extend below and/or be at least partially aligned with the instrument panel structure 20.

The instrument panel of the vehicle may comprise the main display unit 50. In other words, the main display unit 50 may be integrated into the instrument panel. For example, the instrument panel may comprise an instrument display unit which may be the main display unit. Hence, the display screen 52 may be configured to display one or more instruments indicating the values of one or more, e.g. a respective number of, vehicle parameters, such as for example vehicle speed, vehicle temperature, vehicle mode, navigational information and/or infotainment. The main display unit 50 may be the primary non-steering or speed modulating interface between a vehicle operator and the vehicle 1, and hence, the main display unit 50 may be positioned close to, for example in front of, the vehicle operator. As depicted, the main display unit 50 may be positioned towards a first side of the instrument panel structure 20 and the vehicle cabin 10 as shown in Figure 3.

It may be desirable that a vehicle operator can see both the main display screen 52 and the rear-view display screen 34 from a single seated position, e.g. the vehicle operating position. Accordingly, the main display unit 50 and the rear-view display unit 32 may be offset from one another, e.g. in lateral and/or vertical directions relative to the vehicle, such that both are visible when the vehicle 1 is in use by a vehicle operator. This may be achieved, for example, by positioning the trim panel 30, and hence the rear-view display unit 32, forward of the main display unit 50, such that there is a direct line of sight between the vehicle operating position and the rear-view display screen 34. In other words, the main display unit 50 may be mounted rearward of the rear-view display unit. The main display unit 50 may therefore be positioned closer to the vehicle operating position than the rear-view display unit 32. Figure 4 shows a schematic representation of such an arrangement, with a direct line of sight provided between the vehicle operating position, e.g. as defined by the seat 14, and the rear-view display unit 32 over the top of the main display unit 50.

With reference to Figure 5, the main display screen may be configured to display a user interface 500, e.g. a graphical user interface. The user interface may comprise one or more user input options, such as touchscreen buttons and/or sliders for enabling properties of the image displayed by the rear-view display screen 34 to be adjusted. In particular, the user interface 500 may comprise a first user input option 502, e.g. in the form of a touch screen slider, for enabling a brightness of the rear-view display screen to be controlled by a vehicle operator. The rear-view display unit 32 may be configured to receive a brightness adjustment signal from the main display unit 50, based on inputs received from the vehicle operator via the first user input option, and adjust a brightness of the rear-view display screen 34 accordingly.

Additionally or alternatively, the user interface 500 may further comprise a second user input option 504, e.g. in the form of one or more touchscreen buttons, for enabling a Field Of View (FOV), of the rear view image displayed by the rear view display screen 34 to be controlled, e.g. in order to adjust an area to the rear of the vehicle that is visible in the image. The rear-view display unit 32 may be configured to receive a FOV adjustment signal from the main display unit 50, based on inputs received from the vehicle operator via the second user input option 504, and adjust how the rear view image is displayed based on the one or more video signals from one or more rearward facing cameras provided on the vehicle. For example, the rear-view display unit 32 may be configured to display a different portion of one of the video signals, or produce a compound image including a different combination of portions of more than one of the video signals to be displayed by the rear-view display screen 34 based on the FOV adjustment signal. In some arrangement, the main display unit 50 or the rear-view display unit 32 may be configured to send the FOV adjustment signal to one or more of the rearward facing cameras 40 and the one or more rearward facing cameras may be configured to adjust their FOVs based on the FOV adjustment signal, so that the image displayed by the rear-view display screen is adjusted in a corresponding manner.

It will be appreciated that the user interface 500 depicted in Figure 5 is an example only and the user interface according to other arrangements of the disclosure may have any other desirable form and/or provide any other combination of user input options includes the first and/or second user input options 502, 504. Further, each of the user input options 502, 504 may be displayed in a menu or sub menu of the user interface.

Returning briefly to Figures 2 and 3, the vehicle, e.g. the rear view system, may further comprise one or more physical user input devices 26, such as buttons and/or rocker switches, provided on the vehicle separate from the rear-view display unit 32 and/or the main display unit 50. For example, one or more of the physical user input devices 26 may be provided on the instrument panel structure 20, or as depicted in Figures 2 and 3, on the steering wheel 24.

The user interface 500, or another user interface of the main display unit, may comprise a user input option, e.g. a third user input option 506, which is selectable to activate the physical user input device 26 to enable the FOV of the rear-view display unit to be adjusted using the physical user input device 26. The rear-view display unit 32 may receive the FOV adjustment signal from the one or more physical user input devices 26, optionally via the main display unit 50, and adjust the field of view of the rear-view display screen in the same manner as when the FOV adjustment signal is received from the main display screen. The vehicle may thereby, or otherwise, be provided with a physical user input device to enable the FOV of the rear view display screen to be adjusted, e.g. in the same way as by using the user input option of the user interface. When the corresponding user input option 506 is not selected to activate the physical user input device 26, the physical user input device may not be operable to adjust the FOV of the rear-view display screen 52.

Additionally or alternatively, the user interface 500, or another user interface of the main display unit, may comprise a user input option, e.g. a fourth user input option 508, which is selectable to activate one or more of the physical user input devices 26 to enable the brightness of the rear-view display unit to be adjusted using the physical user input device. The rear-view display unit 32 may be configured to receive the brightness adjustment signal from the one or more physical user input devices 26, optionally via the main display unit 50, based on inputs received from the vehicle operator, and adjust a brightness of the rear-view display screen 34 accordingly in the same manner as when the brightness adjustment signal is received from the main display screen. The vehicle may thereby, or otherwise, be provided with a physical user input device to enable the brightness of the rear view display screen to be adjusted, e.g. in the same way as by using the user input option of the user interface. When the corresponding user input option 508 is not selected to activate the physics user input device 26, the physical user input device may not be operable to adjust the brightness of the rear-view display screen 52.

Returning briefly to Figure 1a, the vehicle, e.g. the rear-view system, may further comprise a microphone 28 configured to receive audio inputs from the operator, such as voice commands. The rear-view display unit 32 may be configured to adjust the FOV and/or brightness of the rear-view display screen based on one or more voice commands received via the microphone 28. For example, the rear-view display unit 32 may be configured to receive an audio signal from the microphone 28 and identify a voice command within the audio signal indicating that the FOV of the rear-view display and/or the brightness should be adjusted. In other words, the rear-view display unit 32 may receive the FOV adjustment signal and/or the brightness adjustment signal from the microphone 28 as a voice command. In other arrangements, the vehicle may comprise a voice command system or controller configured to receive the audio signals from the microphone 28 and identify voice commands from the audio signals. In such arrangements, the rear-view display unit 32 may receive the FOV adjustment signal and/or the brightness adjustment signal from the voice command system/controller. In the arrangement depicted in Figure 1, the microphone 28 is mounted to a roof of the vehicle, e.g. within an overhead console 50 of the vehicle. However, in other arrangements, the microphone may be mounted in any other location within the vehicle, such as on the steering wheel 24 or instrument panel structure 20.

Still referring to Figure 1a, the vehicle may comprise one or more further physical input devices, such as buttons 29, for providing inputs to the rear-view display unit 32. As illustrated, the further physical input devices may be provided on the on the overhead console 50. However, in other arrangements, the further physical input devices may, additionally or alternatively, be provided in any other location within the vehicle, such as on the steering wheel 24 or instrument panel structure 20. The further physical input devices may duplicate one or more of the user input options provided by the user interface 500 (or another user interface of the main display screen 52).

It will be appreciated that various changes and modifications can be made to the present invention without departing from the scope of the present application.

## Claims

1. A vehicle comprising:
an instrument panel;
a windscreen; and
a rear-view system comprising:
a rear-view display unit configured to receive one or more video signals from one or more rearward facing cameras provided on the vehicle, the rear-view display unit comprising a rear view display screen configured to display an image of a view to the rear of the vehicle based on the one or more video signals, wherein the rear-view display unit is mounted in the vehicle forward of the instrument panel of the vehicle and outside a field of view through the windscreen,
wherein the vehicle further comprises a main display unit comprising a main display screen configured to display a user interface comprising user input options for enabling a field of view displayed by the rear view display screen and/or brightness of the rear view display screen of the rear-view display unit to be controlled.

2. The vehicle of claim 1, wherein the main display unit is mounted in the vehicle closer to a driving position than the rear-view display unit.

3. The vehicle of claim 1 or 2, wherein the instrument panel comprises the main display unit.

4. The vehicle of any preceding claim, wherein the rear-view system further comprises one or more physical user input buttons provided on an overhead console of the vehicle, wherein the one or more physical user input buttons duplicate one or more of the user input options provided in the user interface displayed by the main display unit.

5. The vehicle of any preceding claim, wherein the user interface includes a user input option selectable to activate a physical user input device provided on a steering wheel to enable the field of view of the rear view display unit to be adjusted using the physical user input device on the steering wheel.

6. The vehicle of any preceding claim, wherein the rear-view display unit is mounted on or above an upper surface of an instrument panel structure of the vehicle.

7. The vehicle of any preceding claim, wherein the rear-view display unit is mounted closer to a lower edge of the windscreen than to the instrument panel in a longitudinal direction of the vehicle.

8. The vehicle of claim 7, wherein the rear-view display unit is substantially aligned with the lower edge of the windscreen in the longitudinal direction of the vehicle.

9. The vehicle of any preceding claim, wherein the rear-view display unit is mounted centrally in a lateral direction of the vehicle.

10. The vehicle of any preceding claim, wherein the rear-view display unit is incorporated within a trim panel of the vehicle arranged beneath the windscreen.

11. The vehicle of any preceding claim, wherein the rear-view display unit is integrated into a sound bar for an entertainment system of the vehicle, wherein the sound bar is arranged beneath the front windscreen.

12. The vehicle of any preceding claim further comprising the one or more rearward facing cameras mounted on a roof or rear facing panel of the vehicle.

13. The vehicle of any preceding claim further comprising a microphone, wherein the rear-view display unit is configured to adjust a field of view and/or brightness of the rear-view display screen based on one or more voice commands received via the microphone.
